# EUROPEAN PATENT SPECIFICATION

(11) **EP 1 116 608 B1**
(45) Date of publication and mention of the grant of the patent: **07.09.2005**
(21) Application number: 00300271.4
(22) Date of filing: 14.01.2000
(51) Int. Cl.: B60C 23/04

(54) **Apparatus for detecting pressure condition in a pneumatic tire**
Vorrichtung zum Erkennen des Reifendruckzustandes
Dispositif de détection de la condition de la pression d'un pneumatique

(43) Date of publication of application: 18.07.2001
(73) Proprietor: Huang, Teng-Wen, Taipei Hsien (TW)
(72) Inventor: Huang, Tien-Tsai, Pan-Chiao City, Taipei Hsien, (TW)
(74) Representative: Skone James, Robert Edmund

(56) References cited:
- EP-A- 0 995 619
- WO-A-88/07941

## Description

The invention relates to the detection of pressure condition in a pneumatic tire, more particularly to an apparatus that includes a portable display unit to permit inspection of the pressure condition in the pneumatic tire from the outside of the vehicle.

In U.S. Patent No. 5,289,161, there is disclosed a known tire pressure indicator that includes a set of pressure gauges, each of which is mounted on a corresponding pneumatic tire of a vehicle, and a receiver device disposed in a driver room of the vehicle. Each pressure gauge wirelessly transmits a pressure signal to be received by the receiver device when the pressure in the corresponding pneumatic tire is not within a predetermined normal operating pressure range. As such, the receiver device can alert the driver of the vehicle in the event of an abnormal tire pressure condition.

However, the known tire pressure indicator only permits inspection of the pressure condition in the pneumatic tire from the inside of the driver room of the vehicle while the vehicle power system is activated. There is thus a need to permit inspection of the pressure condition in the pneumatic tire from the outside of the vehicle without activating the vehicle power system.

Document WO 88/07941 discloses another apparatus for detecting pressure condition in a pneumatic tire on a vehicle body. It corresponds to the preamble of claims 1 and 8.

Therefore, the main object of the present invention is to provide an apparatus that includes a portable display unit which permits inspection of the pressure condition in a pneumatic tire on a vehicle body from the outside of the vehicle body.

Another object of the present invention is to provide an apparatus that permits inspection of the pressure condition in a pneumatic tire of a vehicle without the need for activating the vehicle power system.

According to one aspect of the invention, an apparatus according to claim 1 is used to detect pressure condition in a pneumatic tire on a vehicle body.

Preferably, each of the pressure gauge and the display unit is adapted to draw electric power from a respective battery cell. The monitoring unit is adapted to draw electric power from a power system on the vehicle body regardless of whether or not the power system is activated.

According to another aspect of the invention, an apparatus according to claim 8 is used to detect pressure condition in a pneumatic tire on a vehicle body.

Other features and advantages of the present invention will become apparent in the following detailed description of the preferred embodiments with reference to the accompanying drawings, of which:
Figure 1 is a schematic view illustrating a vehicle that incorporates a set of pressure gauges and a monitoring unit of the first preferred embodiment of a pressure condition detecting apparatus according to the present invention;
Figure 2 is a perspective view illustrating a portable display unit of the first preferred embodiment;
Figure 3 is a schematic circuit block diagram of the first preferred embodiment;
Figure 4 is a schematic circuit diagram of a pressure gauge of the first preferred embodiment;
Figure 5 is a schematic circuit diagram of the monitoring unit of the first preferred embodiment;
Figure 6 is a schematic circuit diagram of the portable display unit of the first preferred embodiment;
Figure 7 is a schematic circuit block diagram of the second preferred embodiment of a pressure condition detecting apparatus according to the present invention;
Figure 8 is a schematic circuit diagram of a pressure gauge and a monitoring unit of the second preferred embodiment;
Figure 9 is a schematic circuit block diagram of the third preferred embodiment of a pressure condition detecting apparatus according to the present invention;
Figure 10 is a schematic circuit block diagram of the fourth preferred embodiment of a pressure condition detecting apparatus according to the present invention; and
Figure 11 is a schematic circuit diagram of a pressure gauge of the fourth preferred embodiment.

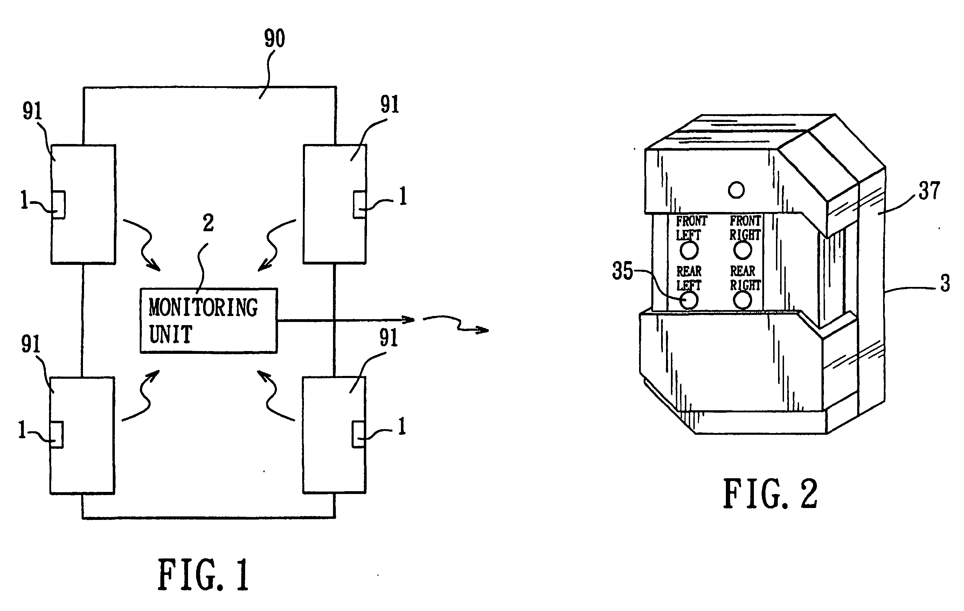

Referring to Figures 1, 2 and 3, the first preferred embodiment of a pressure condition detecting apparatus according to the present invention is shown to comprise a set of pressure gauges 1, a monitoring unit 2, and a portable display unit 3. Each of the pressure gauges 1 is adapted to be mounted inside a respective pneumatic tire 91 on a vehicle body 90. The monitoring unit 2 is adapted to be disposed inside a driver room of the vehicle body 90. The display unit 3 is adapted to be taken out of the driver room of the vehicle body 90 by the vehicle owner.

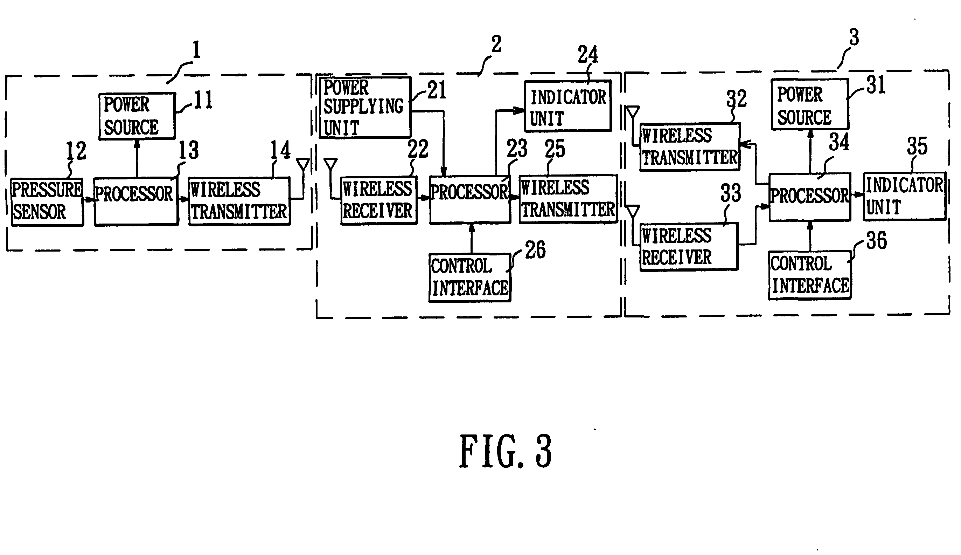

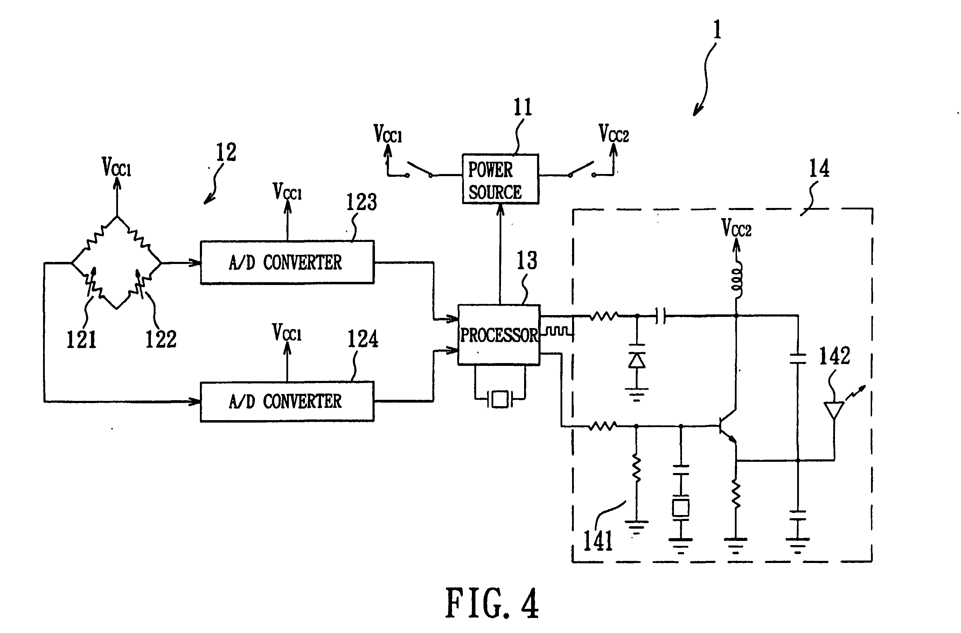

Referring to Figures 3 and 4, each pressure gauge 1 includes a power source 11, a pressure sensor 12, a processor 13, and a wireless transmitter 14, such as a radio-frequency transmitter. The power source 11, such as a battery cell, is connected to the processor 13, and supplies the electrical power required for operation of the pressure gauge 1. The processor 13 is connected to the pressure sensor 12 and the wireless transmitter 14, and controls the supply of electrical power thereto to minimize energy consumption. The pressure sensor 12 is a solid state device and has an equivalent circuit in the form of a resistance bridge. The resistance of two of the resistors 121, 122 of the resistance bridge vary according to changes in the pressure condition inside the pneumatic tire 91. The voltages across the variable resistors 121, 122 serve as inputs to two analog-to-digital (A/D) converters 123 , 124, respectively. The outputs of the A/D converters 123, 124 are connected to the processor 13. The processor 13 compares digital signals received from the A/D converters 123, 124, and generates a pressure signal indicative of the pressure condition inside the pneumatic tire 91. The pressure signal modulates a carrier output of an oscillator circuit 141 of the wireless transmitter 14 using known frequency shift keying (FSK) oramplitude shift keying (ASK) techniques. The modulated carrier output, which is unique to the pressure gauge 1, is subsequently transmitted wirelessly via an antenna 142 of the wireless transmitter 14.

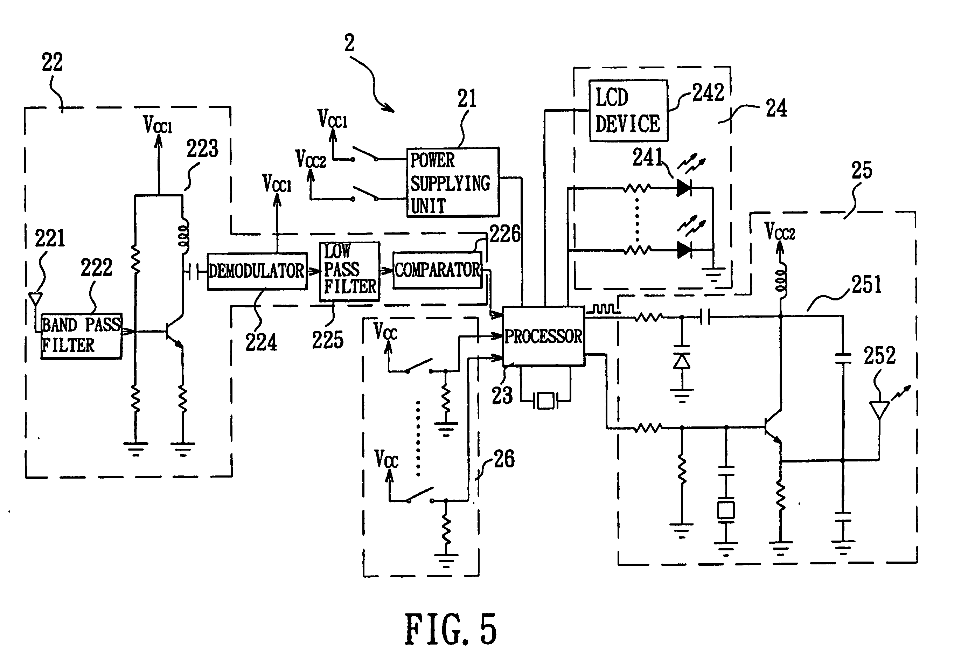

Referring to Figures 3 and 5, the monitoring unit 2 includes a power supplying unit 21, a wireless receiver 22, a processor 23, an indicator unit 24, a wireless transmitter 25, and a control interface 26. The power supplying unit 21 is adapted to draw electric power from the vehicle power system (not shown) regardless of whether or not the vehicle power system is activated. The power supplying unit 21 is connected to the processor 23, and supplies the electrical power required for operation of the monitoring unit 2. The processor 23 is connected to the wireless receiver 22, the indicator unit 24, the wireless transmitter 25 and the control interface 26, and controls the supply of electrical power thereto to minimize energy consumption. The wireless receiver 22, such as a radio-frequency receiver, includes an antenna 221 for receiving the modulated carrier outputs transmitted by the pressure gauges 1. The antenna 221 is connected to a band pass filter 222, and the band pass filter 222 is connected to an amplifier 223 for amplifying the output signal of the band pass filter 222. The amplifier 223 is connected to a demodulator 224 for demodulating the output signal of the amplifier 223. The demodulator 224 is connected to a low pass filter 225 to filter out undesired high frequency components. A comparator 226 is connected to the low pass filter 225, and serves to shape the output of the low pass filter 225 to recover the desired tire pressure condition information. The processor 23 is connected to the comparator 226 to receive the tire pressure condition information. Based on the tire pressure condition information received thereby, the processor 23 activates light emitting diodes 241 of the indicator unit 24 to indicate the pressure condition in the pneumatic tires 91. In a preferred implementation, each of the light emitting diodes 241 is activated only upon detection that the corresponding pneumatic tire 91 has an abnormal pressure condition. In another preferred implementation, each of the light emitting diodes 241 is designed to generate light of a first color, such as red, upon detection that the corresponding pneumatic tire 91 has an abnormal pressure condition, and to generate light of a second color, such as green, upon detection that the corresponding pneumatic tire 91 has a normal pressure condition. The indicator unit 24 can further include a liquid crystal display (LCD) device 242 controlled by the processor 23 in order to indicate the exact pressure value in each of the pneumatic tires 91. The processor 23 further provides a pressure condition signal to the wireless transmitter 25, such as a radio-frequency transmitter. The pressure condition signal contains information as to the pressure condition in each of the pneumatic tires 91, and modulates a carrier output of an oscillator circuit 251 of the wireless transmitter 25. The modulated carrier output of the oscillator circuit 251 is subsequently transmitted wirelessly via an antenna 252 of the wireless transmitter 25. The control interface 26 is provided to control operation of the processor 23.

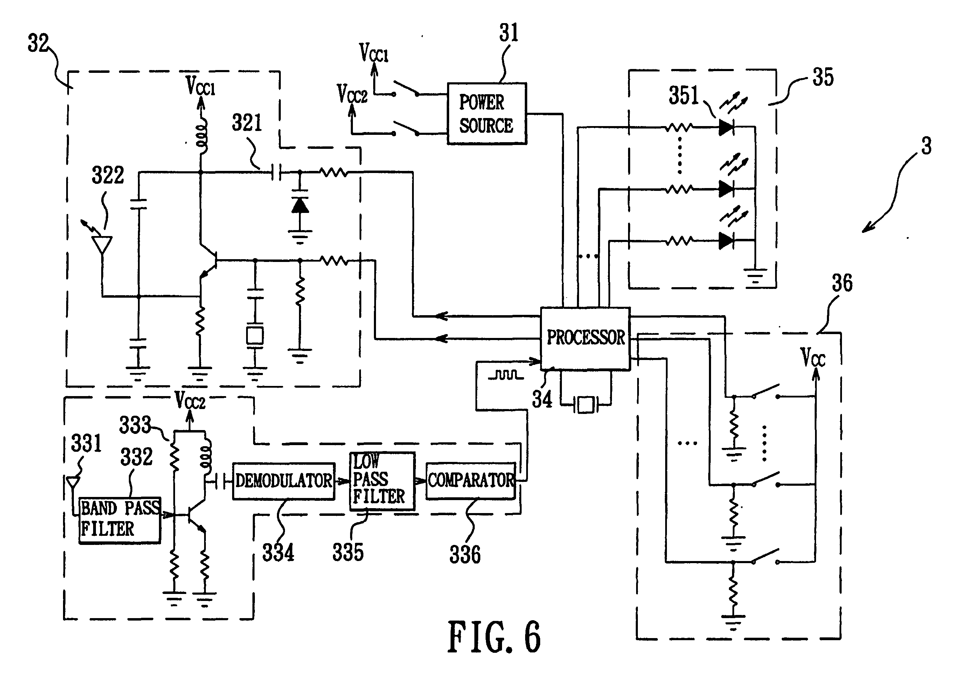

Referring to Figures 3 and 6, the display unit 3 includes a power source 31, a wireless transmitter 32, a wireless receiver 33, a processor 34, an indicator unit 35, and a control interface 36. The power source 31, such as a battery cell, is connected to the processor 34, and supplies the electrical power required for operation of the display unit 3. The processor 34 is connected to the wireless transmitter 32, the wireless receiver 33, the indicator unit 35 and the control interface 36, and controls the supply of electrical power thereto to minimize energy consumption. Upon detection by the processor 34 that the wireless receiver 33 failed to receive the modulated carrier output from the monitoring unit 2 within a predetermined time period, the processor 34 generates a request signal that is provided to the wireless transmitter 32. The wireless transmitter 32, such as a radio-frequency transmitter, includes an oscillator circuit 321 and an antenna 322. The request signal modulates a carrier output of the oscillator circuit 321, and the modulated carrier output is transmitted wirelessly by the antenna 322 for reception by the wireless receiver 22 of the monitoring unit 2. When the processor 23 of the monitoring unit 2 receives the request signal from the wireless receiver 22, the processor 23 generates the pressure condition signal that is provided to and that is transmitted wirelessly by the wireless transmitter 25. The wireless receiver 33, such as a radio-frequency receiver, has an antenna 331 for receiving the wireless transmission from the monitoring unit 2. The antenna 331 is connected to a band pass filter 332, and the band pass filter 332 is connected to an amplifier 333 for amplifying the output signal of the band pass filter 332. The amplifier 333 is connected to a demodulator 334 for demodulating the output signal of the amplifier 333. The demodulator 334 is connected to a low pass filter 335 to filter out undesired high frequency components. A comparator 336 is connected to the low pass filter 335, and serves to shape the output of the low pass filter 335 to recover the desired tire pressure condition information. The processor 34 is connected to the comparator 336 to receive the tire pressure condition information. Based on the tire pressure condition information received thereby, the processor 34 activates the indicator unit 35.

Referring once again to Figure 2, the various components of the display unit 3 are mounted inside a handheld housing 37. The indicator unit 35 includes a set of light emitting diodes 351 disposed on the surface of the housing 37 to indicate the pressure condition in the pneumatic tires 91, respectively. In a preferred implementation, each of the light emitting diodes 351 is activated only upon detection that the corresponding pneumatic tire 91 has an abnormal pressure condition. In another preferred implementation, each of the light emitting diodes 351 is designed to generate light of a first color, such as red, upon detection that the corresponding pneumatic tire 91 has an abnormal pressure condition, and to generate light of a second color, such as green, upon detection that the corresponding pneumatic tire 91 has a normal pressure condition. The indicator unit 35 can further include a liquid crystal display (LCD) device (not shown) controlled by the processor 34 in order to indicate the exact pressure value in each of the pneumatic tires 91.

Referring once again to Figures 3 and 6, the control interface 36 is provided to control operation of the processor 34. For example, in a condition where the monitoring unit 2 does not automatically and periodically transmit the pressure condition signal, or where the display unit 3 fails to receive the pressure condition signal from the monitoring unit 2 within the predetermined time period, the control interface 36 can be operated to enable the processor 34 to generate the aforesaid request signal that is provided to the wireless transmitter 32. It is to be understood that the display unit 3 need not transmit the request signal in case the monitoring unit 2 periodically and automatically transmits the pressure condition signal.

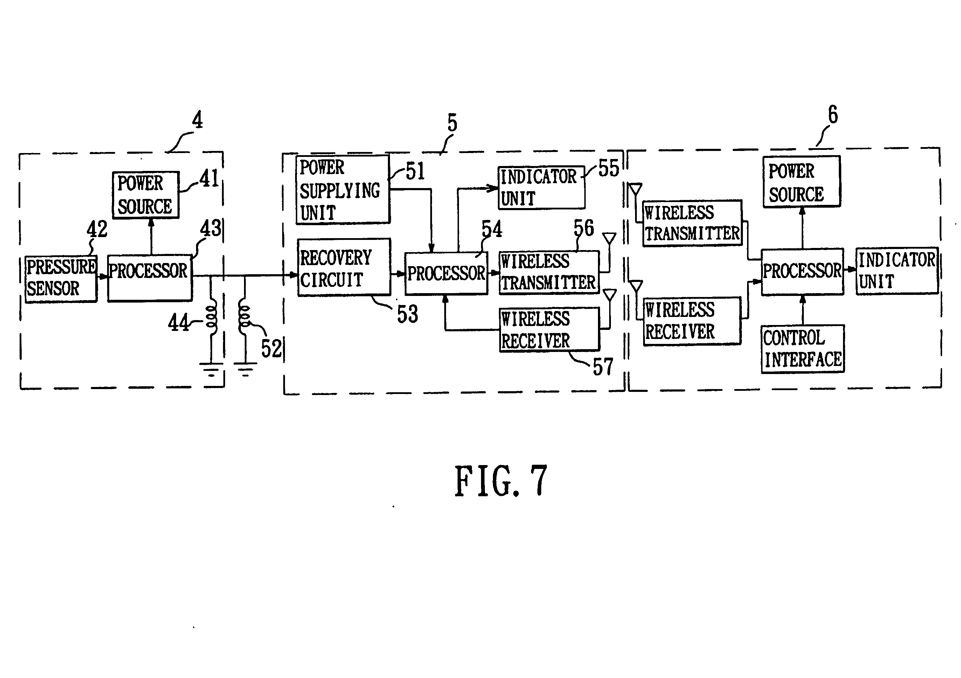

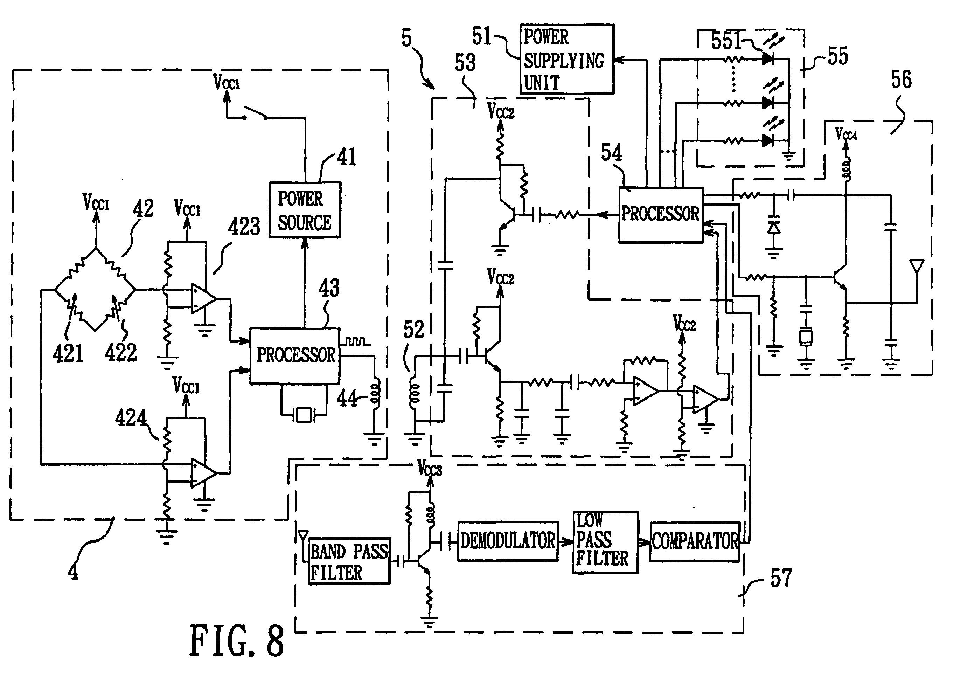

Referring to Figures 7 and 8, the second preferred embodiment of a pressure condition detecting apparatus according to the present invention is shown to also comprise a set of pressure gauges 4 (only one is shown), a monitoring unit 5, and a portable display unit 6. The main difference between the first and second preferred embodiment resides in the manner pressure signals from the pressure gauges 4 are transmitted to the monitoring unit 5. As to how the pressure condition signal from the monitoring unit 5 is transmitted to and is processed by the display unit 6, the manner as such is similar to that in the first preferred embodiment and will not be described hereinafter for the sake of brevity.

Each pressure gauge 4 includes a power source 41, a pressure sensor 42, a processor 43, and a wireless transmitter in the form of a first sensing coil 44. The power source 41, such as a battery cell, is connected to the processor 43, and supplies the electrical power required for operation of the pressure gauge 4. The processor 43 is connected to the pressure sensor 42 and the first sensing coil 44, and controls the supply of electrical power thereto to minimize energy consumption. Like the pressure sensor 12 of the pressure gauge 1 of the previous embodiment, the pressure sensor 42 is a solid state device, and has an equivalent circuit in the form of a resistance bridge with two variable resistors 421, 422. The voltages across the variable resistors 421, 422 serve as inputs to two comparators 423, 424, respectively. The outputs of the comparators 423, 424 are connected to the processor 43. The processor 43 compares the output signals from the comparators 423, 424, and generates a pressure signal indicative of the pressure condition inside the corresponding pneumatic tire. The pressure signal is supplied to the first sensing coil 44.

The monitoring unit 5 includes a power supplying unit 51, a plurality of second sensing coils 52 (only one is shown), a plurality of recovery circuits 53 (only one is shown), a processor 54, an indicator unit 55, a wireless transmitter 56 and a wireless receiver 57. The power supplying unit 51 is adapted to draw electric power from the vehicle power system (not shown) regardless of whether or not the vehicle power system is activated. The power supplying unit 51 is connected to the processor 54, and supplies the electrical power required for operation of the monitoring unit 5. The processor 54 is connected to the second sensing coils 52, the recovery circuits 53, the indicator unit 55, the wireless transmitter 56 and the wireless receiver 57, and controls the supply of electrical power thereto to minimize energy consumption. Each of the second sensing coils 52 is adapted to be mounted on the vehicle body (not shown) adjacent to a respective one of the pneumatic tires (not shown) . Each of the second sensing coil 52 functions as a wireless receiver, and co-acts with the first sensing coil 46 of the pressure gauge 4 in the respective one of the pneumatic tires by virtue of mutual resonance for inducing the pressure signal from the first sensing coil 46 to the second sensing coil 52 as the pressure gauge 4 is moved so as to be proximate to the second sensing coil 52 due to rotation of the pneumatic tire relative to the vehicle body. Each of the recovery circuits 53 is connected to a respective one of the second sensing coils 52, and recovers the desired pressure condition information from the pressure signal that was induced in the respective second sensing coil 52. The processor 54 is connected to the recovery circuits 53 to receive the tire pressure condition information therefrom. Based on the tire pressure condition information received thereby, the processor 54 activates light emitting diodes 551 of the indicator unit 55 to indicate the pressure condition in the pneumatic tires. In a preferred implementation, each of the light emitting diodes 551 is activated only upon detection that the corresponding pneumatic tire has an abnormal pressure condition. In another preferred implementation, each of the light emitting diodes 551 is designed to generate light of a first color, such as red, upon detection that the corresponding pneumatic tire has an abnormal pressure condition, and to generate light of a second color, such as green, upon detection that the corresponding pneumatic tire has a normal pressure condition. The processor 54 further provides a pressure condition signal to the wireless transmitter 56, such as a radio-frequency transmitter. The pressure condition signal contains information as to the pressure condition in each of the pneumatic tires, and modulates a carrier of the wireless transmitter 56. The modulated carrier is transmitted subsequently by the wireless transmitter 56 for reception by the display unit 6. The wireless receiver 57, such as a radio-frequency receiver, is connected to the processor 54, and receives request signals transmitted by the display unit 6 in a manner similar to that of the wireless receiver 22 of the monitoring unit 2 of the previous embodiment.

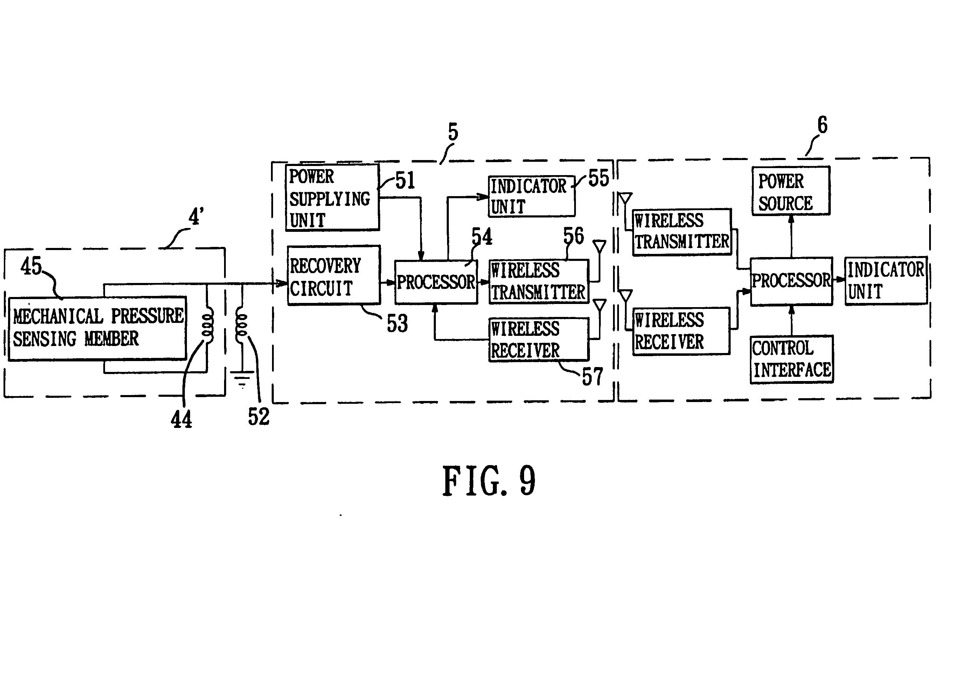

Figure 9 illustrates the third preferred embodiment of a pressure condition detecting apparatus according to the present invention. Unlike the second preferred embodiment, each of a set of pressure gauges 4' (only one is shown) includes a conventional mechanical pressure sensing member 45 connected to a first sensing coil 44. Upon detection by the pressure sensing member 45 that the pressure within the respective pneumatic tire does not fall within the normal operating pressure range, the pressure sensing member 45 generates a corresponding pressure signal that is supplied to the first sensing coil 44. The pressure signal is subsequently induced to the corresponding second sensing coil 52 of the monitoring unit 5 in a manner similar to that in the second preferred embodiment.

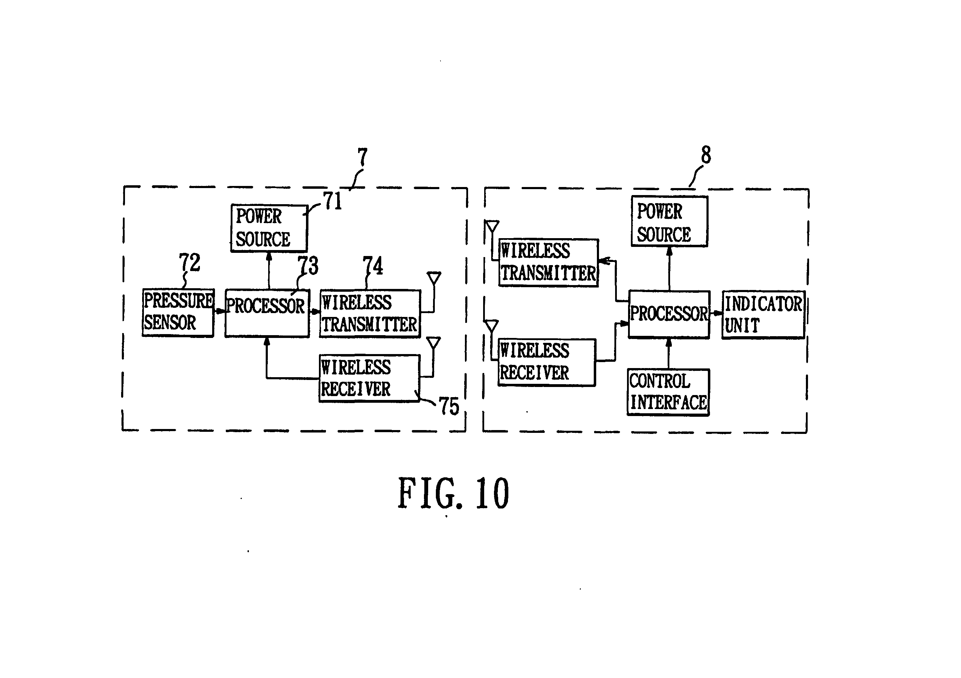

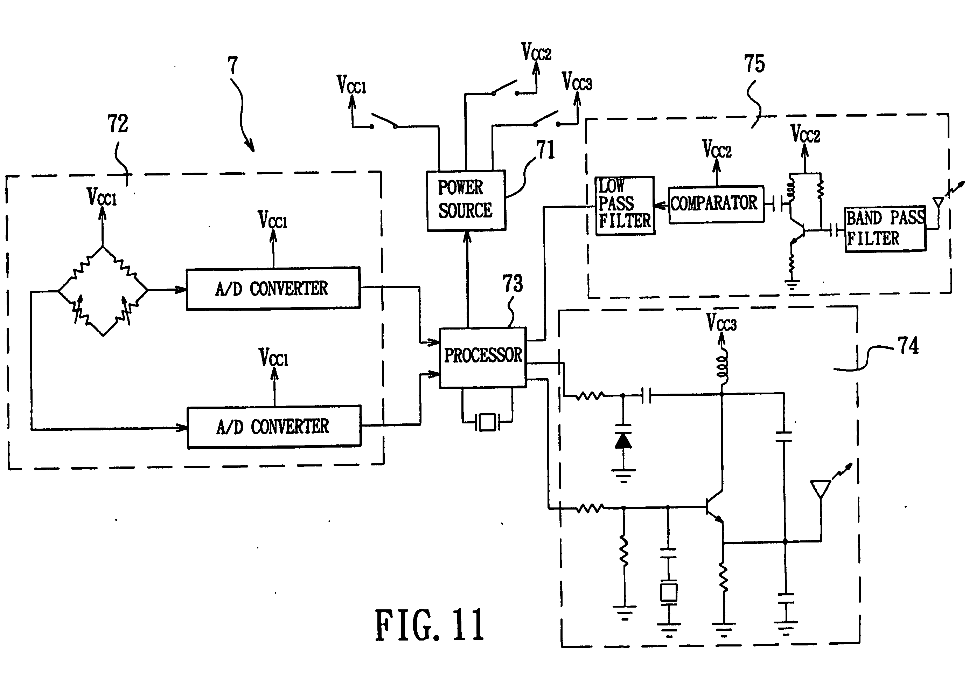

The fourth preferred embodiment of a pressure condition detecting apparatus according to the present invention is shown in Figures 10 and 11. Unlike the previous embodiments, the pressure condition detecting apparatus of this embodiment only comprises a set of pressure gauges 7 (only one is shown) and a portable display unit 8. A monitoring unit similar to that of the previous embodiments is not in use.

Like the first preferred embodiment, each pressure gauge 7 includes a power source 71, a pressure sensor 72, a processor 73, and a wireless transmitter 74, all of which operate in a manner similar to the pressure gauge 1 shown in Figure 4. However, unlike the pressure gauge 1 of the first preferred embodiment, the pressure gauge 7 further includes a wireless receiver 75, such as a radio-frequency receiver. The wireless receiver 75 is connected to the processor 73, and receives request signals transmitted by the display unit 8. When the processor 73 receives the request signal from the wireless receiver 75, the processor 73 generates the pressure signal that is provided to and that is transmitted wirelessly by the wireless transmitter 74 for reception by the display unit 8. It is to be understood that the display unit 8 need not transmit the request signal in case the pressure gauges 7 periodically and automatically transmit the pressure signal.

It has thus been shown that the pressure condition detecting apparatus of this invention permits inspection of the pressure condition in the pneumatic tires of a vehicle from the outside of the vehicle with the use of a portable display unit and without the need for activating the power system of the vehicle. The objects of the invention are thus met.

## Claims

1. An apparatus for detecting pressure condition in a pneumatic tire (91) on a vehicle body (90), including a pressure gauge (1, 4, 4') adapted to be mounted on the pneumatic tire (91), and a monitoring unit (2, 5) adapted to be disposed inside a driver room of the vehicle body (90), comprising:
the pressure gauge (1, 4, 4') including pressure sensing means (12,42,45) for detecting pressure inside the pneumatic tire (91) and for generating a pressure signal corresponding to the pressure inside the pneumatic tire (91), and first wireless transmitter means in the form of a first sensing coil (44) connected to the pressure sensing means (12,42,45), for wirelessly transmitting the pressure signal;
the monitoring unit (2,5) including first wireless receiver means in the form of a second sensing coil (52) for wirelessly receiving the pressure signal transmitted by the first wireless transmitter means (14,44), first indicator means (24,55) for indicating the pressure condition in the pneumatic tire (91) based on the pressure signal received by the first wireless receiver means (52); **characterized by** said monitoring unit further including second wireless transmitter means (25,56) for wirelessly transmitting the pressure signal, the first wireless receiver means (52) being adapted to be mounted on the vehicle body (90) adjacent to the pneumatic tire (91), the second sensing coil co-acting with the first sensing coil by virtue of mutual resonance for inducing the pressure signal from the first sensing coil to the second sensing coil as the pressure gauge (4,4') is moved so as to be proximate to the second sensing coil due to the rotation of the pneumatic tire (91) relative to the vehicle body (90) and by
a portable display unit (3,6) adapted to be taken out of the driver room of the vehicle body (90), the display unit (3,6) including second wireless receiver means (33) for wirelessly receiving the pressure signal transmitted by the second wireless transmitter means (25, 56), and second indicator means (35) for indicating the pressure condition in the pneumatic tire (91) based on the pressure signal received by the second wireless receiver means (33).

2. The apparatus of Claim 1, **characterized in that** the display unit (3) further includes third wireless transmitter means (32) operable for wirelessly transmitting a request signal to the first wireless receiver means (22) of the monitoring unit (2), the second wireless transmitter means (25) of the monitoring unit (2) being configured to wirelessly transmit the pressure signal when the first wireless receiver means (22) receives the request signal.

3. The apparatus of Claim 2, further **characterized in that** the third wireless transmitter means (32) is configured to transmit the request signal periodically.

4. The apparatus of Claim 1 or claim 2, wherein the second wireless transmitter means (25, 56) is configured to transmit the pressure signal periodically.

5. Apparatus according to any of the preceding claims, wherein each of the first and second wireless transmitter means (14, 25) includes a radio-frequency transmitter, and each of the first and second wireless receiver means (22, 33) includes a radio-frequency receiver.

6. Apparatus according to any of the preceding claims, wherein each of the pressure gauge (1, 4, 4') and the display unit (3, 6) is adapted to draw electric power from a respective battery cell (11, 31).

7. Apparatus according to any of the preceding claims, wherein the monitoring unit (2, 5) is adapted to draw electric power from a power system on the vehicle body (90) regardless of whether or not the power system is activated.

8. An apparatus for detecting pressure condition in a pneumatic tire (91) on a vehicle body (90), including a pressure gauge (7) adapted to be mounted on the pneumatic tire (91),
the pressure gauge (7) including pressure sensing means (72) for detecting pressure inside the pneumatic tire (91) and for generating a pressure signal corresponding to the pressure inside the pneumatic tire (91), first wireless transmitter means (74), connected to the pressure sensing means (72), for wirelessly transmitting the pressure signal, charaterized by said pressure gauge (7) further including second wireless receiver means (75) for receiving the request signal transmitted by the second wireless transmitter means of the display unit (8), the first wireless transmitter means (74) of the pressure gauge (7) being configured to wirelessly transmit the request signal when the second wireless receiver means (75) receives the request signal; and further **characterized by**
a portable display unit (8) adapted to be taken out of a driver room of the vehicle body (90), the display unit (8) including first wireless receiver means for wirelessly receiving the pressure signal transmitted by the first wireless transmitter means (74), indicator means for indicating the pressure condition in the pneumatic tire (91) based on the pressure signal received by the first wireless receiver means, and second wireless transmitter means operable for wirelessly transmitting a request signal, configured to transmit the request signal periodically.

9. Apparatus according to claim 8, wherein the first wireless transmitter means (74) is configured to transmit the pressure signal periodically.

10. Apparatus according to claim 8 or 9, wherein the first wireless transmitter means (74) includes a radio-frequency transmitter, and the first wireless receiver means includes a radio-frequency receiver.

11. Apparatus according to any of claims 8 to 10, wherein each of the pressure gauge (7) and the display unit (8) is adapted to draw electric power from a respective battery cell (71).

## Patentansprüche

1. Vorrichtung zum Erfassen eines Druckzustands in einem Luftreifen (91) an einer Fahrzeugkarosserie (90), mit einer Druckmesseinrichtung (1, 4, 4'), die zur Montage am Luftreifen (91) angepasst ist, und einer Überwachungseinheit (2, 5), die zur Anordnung in einem Fahrgastraum der Fahrzeugkarosserie (90) angepasst ist,
wobei die Druckmesseinrichtung (1, 4, 4') ein Drucksensormittel (12, 42, 45) zum Erfassen eines Drucks innerhalb des Luftreifens (91) und zum Erzeugen eines dem Druck innerhalb des Luftreifens (91) entsprechenden Drucksignals und ein erstes drahtloses Sendemittel in der Form einer mit dem Drucksensormittel (12, 42, 45) verbundenen ersten Sensorspule (44) zum drahtlosen Senden des Drucksignals aufweist;
wobei die Überwachungseinheit (2, 5) ein erstes drahtloses Empfangsmittel in der Form einer zweiten Sensorspule (52) zum drahtlosen Empfangen des vom ersten drahtlosen Sendemittel (14, 44) gesendeten Drucksignals, ein erstes Anzeigemittel (24, 55) zum Anzeigen des Druckzustands im Luftreifen (91) auf der Grundlage des vom ersten drahtlosen Empfangsmittel (52) empfangenen Drucksignals aufweist,
**dadurch gekennzeichnet, dass** die Überwachungseinheit weiter ein zweites drahtloses Sendemittel (25, 56) zum drahtlosen Senden des Drucksignals aufweist, wobei das erste drahtlose Empfangsmittel (52) dazu ausgelegt ist, an der Fahrzeugkarosserie (90) neben dem Luftreifen (91) angebracht zu sein, wobei die zweite Sensorspule mit der ersten Sensorspule durch gegenseitige Resonanz zusammenwirkt, um das Drucksignal von der ersten Sensorspule in der zweiten Sensorspule zu induzieren, wenn die Druckmesseinrichtung (4, 4') aufgrund der Rotation des Luftreifens (91) relativ zur Fahrzeugkarosserie (90) so bewegt wird, dass sie der zweiten Sensorspule nahe ist; und durch
eine tragbare Anzeigeeinheit (3, 6), die dazu ausgelegt ist, aus dem Fahrgastraum der Fahrzeugkarosserie (90) herausgenommen zu werden,
wobei die Anzeigeeinheit (3, 6) ein zweites drahtloses Empfangsmittel (33) zum drahtlosen Empfangen des vom zweiten drahtlosen Sendemittel (25, 56) gesendeten Drucksignals, und ein zweites Anzeigemittel (35) zum Anzeigen des Druckzustands im Luftreifen (91) auf der Grundlage des vom zweiten drahtlosen Empfangsmittel (33) empfangenen Drucksignals aufweist.

2. Vorrichtung nach Anspruch 1, **dadurch gekennzeichnet, dass** die Anzeigeeinheit (3) weiter ein drittes drahtloses Sendemittel (32) aufweist, das zum drahtlosen Senden eines Anforderungssignals an das erste drahtlose Empfangsmittel (22) der Überwachungseinheit (2) betreibbar ist,
wobei das zweite drahtlose Sendemittel (25) der Überwachungseinheit (2) so konfiguriert ist, dass es das Drucksignal drahtlos sendet, wenn das erste drahtlose Empfangsmittel (22) das Anforderungssignal empfängt.

3. Vorrichtung nach Anspruch 2, weiter **dadurch gekennzeichnet, dass** das dritte drahtlose Sendemittel (32) dazu konfiguriert ist, das Anforderungssignal periodisch zu senden.

4. Vorrichtung nach Anspruch 1 oder Anspruch 2, wobei das zweite drahtlose Sendemittel (25, 56) dazu konfiguriert ist, das Drucksignal periodisch zu senden.

5. Vorrichtung nach einem der vorhergehenden Ansprüche, wobei das erste und das zweite drahtlose Sendemittel (14, 25) jeweils einen Hochfrequenzsender aufweisen und das erste und das zweite drahtlose Empfangsmittel (22, 33) jeweils einen Hochfrequenzempfänger aufweisen.

6. Vorrichtung nach einem der vorhergehenden Ansprüche, wobei die Druckmesseinrichtung (1, 4, 4') und die Anzeigeeinheit (3, 6) jeweils dazu ausgelegt sind, elektrische Leistung von einer entsprechenden Batteriezelle (11, 31) zu beziehen.

7. Vorrichtung nach einem der vorhergehenden Ansprüche, wobei die Überwachungseinheit (2, 5) dazu ausgelegt ist, elektrische Leistung von einem Leistungssystem an der Fahrzeugkarosserie (90) unabhängig davon zu beziehen, ob das Leistungssystem aktiviert ist oder nicht.

8. Vorrichtung zum Erfassen eines Druckzustands in einem Luftreifen (91) an einer Fahrzeugkarosserie (90), mit einer Druckmesseinrichtung (7), die zur Montage am Luftreifen (91) angepasst ist,
wobei die Druckmesseinrichtung (7) ein Drucksensormittel (72) zum Erfassen eines Drucks innerhalb des Luftreifens (91) und zum Erzeugen eines dem Druck innerhalb des Luftreifens (91) entsprechenden Drucksignals, ein erstes drahtloses Sendemittel (74), das mit dem Drucksensormittel (72) verbunden ist, zum drahtlosen Senden des Drucksignals aufweist;
**dadurch gekennzeichnet, dass** die Druckmesseinrichtung (7) weiter ein zweites drahtloses Empfangsmittel (75) zum Empfangen des vom zweiten drahtlosen Sendemittel der Anzeigeeinheit (8) gesendeten Anforderungssignals aufweist, wobei das erste drahtlose Sendemittel (74) der Druckmesseinrichtung (7) dazu konfiguriert ist, das Anforderungssignal drahtlos zu senden, wenn das zweite drahtlose Empfangsmittel (75) das Anforderungssignal empfängt; und weiter **gekennzeichnet durch** eine tragbare Anzeigeeinheit (8), die dazu ausgelegt ist, aus dem Fahrgastraum der Fahrzeugkarosserie (90) herausgenommen zu werden,
wobei die Anzeigeeinheit (8) ein erstes drahtloses Empfangsmittel zum drahtlosen Empfangen des vom ersten drahtlosen Sendemittel (74) gesendeten Drucksignals, ein Anzeigemittel zum Anzeigen des Druckzustands im Luftreifen (91) auf der Grundlage des vom ersten drahtlosen Empfangsmittel empfangenen Drucksignals, und ein zweites drahtloses Sendemittel aufweist, das zum drahtlosen Senden eines Anforderungssignals betreibbar und dazu konfiguriert ist, das Anforderungssignal periodisch zu senden.

9. Vorrichtung nach Anspruch 8, bei der das erste drahtlose Sendemittel (74) dazu konfiguriert ist, das Drucksignal periodisch zu senden.

10. Vorrichtung nach Anspruch 8 oder 9, wobei das erste drahtlose Sendemittel (74) einen Hochfrequenzsender und das erste drahtlose Empfangsmittel einen Hochfrequenzempfänger aufweist.

11. Vorrichtung nach einem der Ansprüche 8 bis 10, wobei die Druckmesseinrichtung (7) und die Anzeigeeinheit (8) jeweils dazu ausgelegt sind, elektrische Leistung von einer entsprechenden Batteriezelle (71) zu beziehen.

## Revendications

1. Dispositif destiné à détecter une condition de pression dans un pneumatique (91) sur une carrosserie de véhicule (90), comprenant une jauge de pression (1, 4, 4') adaptée pour être montée sur le pneumatique (91), et une unité de contrôle (2, 5) adaptée pour être disposée à l'intérieur d'un habitacle de la carrosserie de véhicule (90), comprenant :
la jauge de pression (1, 4, 4') comprenant des moyens de détection de pression (12, 42, 45) destinés à détecter une pression à l'intérieur du pneumatique (91) et destinés à générer un signal de pression correspondant à la pression à l'intérieur du pneumatique (91), et des premiers moyens formant émetteur sans fil sous la forme d'une première bobine de détection (44) raccordée aux moyens de détection de pression (12, 42, 45), pour émettre sans fil le signal de pression ;
l'unité de contrôle (2, 5) comprenant des premiers moyens formant récepteur sans fil sous la forme d'une deuxième bobine de détection (52) pour recevoir sans fil le signal de pression émis par les premiers moyens formant émetteur sans fil (14, 44), des premiers moyens formant indicateur (24, 55) destinés à indiquer la condition de pression dans le pneumatique (91) en fonction du signal de pression reçu par les premiers moyens formant récepteur sans fil (52) ;
**caractérisé en ce que** ladite unité de contrôle comprend en outre des deuxièmes moyens formant émetteur sans fil (25, 56) destinés à émettre sans fil le signal de pression, les premiers moyens formant récepteur sans fil (52) étant adaptés pour être montés sur la carrosserie de véhicule (90) adjacente au pneumatique (91), la deuxième bobine de détection agissant conjointement avec la première bobine de détection en raison d'une résonance mutuelle destinée à induire le signal de pression à partir de la première bobine de détection vers la deuxième bobine de détection alors que la jauge de pression (4, 4') est déplacée de manière à être proche de la deuxième bobine de détection en raison de la rotation du pneumatique (91) par rapport à la carrosserie de véhicule (90) et **caractérisé par**
une unité d'affichage portable (3, 6) adaptée pour être retirée de l'habitacle de la carrosserie de véhicule (90), l'unité d'affichage (3, 6) comprenant des deuxièmes moyens formant récepteur sans fil (33) destinés à recevoir sans fil le signal de pression émis par les deuxièmes moyens formant émetteur sans fil (25, 56) et des deuxièmes moyens formant indicateur (35) destinés à indiquer la condition de pression dans le pneumatique (91) en fonction du signal de pression reçu par les deuxièmes moyens formant récepteur sans fil (33).

2. Dispositif selon la revendication 1, **caractérisé en ce que** l'unité d'affichage (3) comprend en outre des troisièmes moyens formant émetteur sans fil (32) pouvant être actionnés pour émettre sans fil un signal de requête en direction des premiers moyens formant récepteur sans fil (22) de l'unité de contrôle (2), les deuxièmes moyens formant émetteur sans fil (25) de l'unité de contrôle (2) étant configurés pour émettre sans fil le signal de pression lorsque les premiers moyens formant récepteur sans fil (22) reçoivent le signal de requête.

3. Dispositif selon la revendication 2, **caractérisé en outre en ce que** les troisièmes moyens formant émetteur sans fil (32) sont configurés pour émettre le signal de requête régulièrement.

4. Dispositif selon la revendication 1 ou la revendication 2, dans lequel les deuxièmes moyens formant émetteur sans fil (25, 26) sont configurés pour émettre le signal de pression régulièrement.

5. Dispositif selon l'une quelconque des revendications précédentes, dans lequel chacun des premiers et deuxièmes moyens formant émetteur sans fil (14, 25) comprend un émetteur à radiofréquence, et chacun des premiers et deuxièmes moyens formant récepteur sans fil (22, 33) comprend un récepteur à radiofréquence.

6. Dispositif selon l'une quelconque des revendications précédentes, dans lequel chacune de la jauge de pression (1, 4, 4') et de l'unité d'affichage (3, 6) est adaptée pour tirer une énergie électrique provenant d'une cellule de batterie respective (11, 31).

7. Dispositif selon l'une quelconque des revendications précédentes, dans lequel l'unité de contrôle (2, 5) est adaptée pour tirer une énergie électrique provenant d'un système d'alimentation sur la carrosserie de véhicule (90) que le système d'alimentation soit activé ou non.

8. Dispositif destiné à détecter une condition de pression dans un pneumatique (91) sur une carrosserie de véhicule (90), comprenant une jauge de pression (7) adaptée pour être montée sur le pneumatique (91),
la jauge de pression (7) comprenant des moyens de détection de pression (72) destinés à détecter la pression à l'intérieur du pneumatique (91) et destinés à générer un signal de pression correspondant à la pression à l'intérieur du pneumatique (91), des premiers moyens formant émetteur sans fil (74), raccordés aux moyens de détection de pression (72), destinés à émettre sans fil le signal de pression,
**caractérisé en ce que** ladite jauge de pression (7) comprend en outre des deuxièmes moyens formant récepteur sans fil (75) destinés à recevoir le signal de requête émis par les deuxièmes moyens formant émetteur sans fil de l'unité d'affichage (8), les premiers moyens formant émetteur sans fil (74) de la jauge de pression (7) étant configurés pour émettre sans fil le signal de requête lorsque les deuxièmes moyens formant récepteur sans fil (75) reçoivent le signal de requête ; et **caractérisé en outre par**
une unité d'affichage portable (8) adaptée pour être retirée d'un habitacle de la carrosserie de véhicule (90), l'unité d'affichage (8) comprenant des premiers moyens formant récepteur sans fil destinés à recevoir sans fil le signal de pression émis par les premiers moyens formant émetteur sans fil (74), des moyens formant indicateur destinés à indiquer la condition de pression dans le pneumatique (91) en fonction du signal de pression reçu par les premiers moyens formant récepteur sans fil, et des deuxièmes moyens formant émetteur sans fil pouvant être actionnés pour émettre sans fil un signal de requête, configurés pour émettre le signal de requête régulièrement.

9. Dispositif selon la revendication 8, dans lequel les premiers moyens formant émetteur sans fil (74) sont configurés pour émettre le signal de pression régulièrement.

10. Dispositif selon la revendication 8 ou 9, dans lequel les premiers moyens formant émetteur sans fil (74) comprennent un émetteur à radiofréquence, et les premiers moyens formant récepteur sans fil comprennent un récepteur à radiofréquence.

11. Dispositif selon l'une quelconque des revendications 8 à 10, dans lequel chacune de la jauge de pression (7) et de l'unité d'affichage (8) est adaptée pour tirer une énergie électrique provenant d'une cellule de batterie respective (71).
